# EUROPÄISCHE PATENTSCHRIFT

(11) **EP 1 802 887 B1**
(45) Veröffentlichungstag und Bekanntmachung des Hinweises auf die Patenterteilung: **16.01.2008**
(21) Anmeldenummer: 05799666.2
(22) Anmeldetag: 18.10.2005
(51) Int. Cl.: F16D 65/097, F16D 69/04

(54) **BREMSBELAG MIT DÄMPFUNGSBLECH**
BRAKE LINING PROVIDED WITH A DAMPER PLATE
GARNITURE DE FREIN COMPRENANT UNE PLAQUE D'AMORTISSEMENT

(30) Priorität: 21.10.2004 DE 102004051269
(43) Veröffentlichungstag der Anmeldung: 04.07.2007
(73) Patentinhaber: TMD Friction GmbH, 51381 Leverkusen (DE)
(72) Erfinder: RÖHLING, Willmut, 53809 Ruppichteroth (DE)
(74) Vertreter: Müller, Eckhard
(86) Internationale Anmeldenummer: PCT/EP2005/011204
(87) Internationale Veröffentlichungsnummer: WO 2006/045496

(56) Entgegenhaltungen:
- EP-A- 0 282 129
- EP-A- 0 636 807
- DE-A1- 19 542 524
- DE-C1- 4 104 812
- US-A- 3 477 551
- PATENT ABSTRACTS OF JAPAN Bd. 008, Nr. 054 (M-282), 10. März 1984 (1984-03-10) -& JP 58 207535 A (NISSAN JIDOSHA KK), 3. Dezember 1983 (1983-12-03)

## Beschreibung

Die Erfindung betrifft einen Bremsbelag mit einer Belagträgerplatte, einem auf einer ersten Seite der Belagträgerplatte angeordneten Reibbelag, einem Dämpfungsblech, das an einer zweiten, dem Reibbelag abgewandten Seite der Belagträgerplatte angeordnet ist und Mitteln zur Sicherung des Dämpfungsbleches gegen seitliches Verrutschen.

Ein Bremsbelag der genannten Art ist aus der WO 96/15386 bekannt. Ein Dämpfungsblech koppelt einen auf den Bremsbelag wirkenden Bremskolben schwingungsmäßig von der Belagträgerplatte des Bremsbelags ab. Eine Klebstoffschicht, z.B. eine kalt- oder heißklebende Polymerschicht, ist auf an der Unterseite des Dämpfungsbleches aufgebracht und dient zum Befestigen des Dämpfungsblechs an der Belagträgerplatte und zur Verbesserung der Dämpfungseigenschaften. Kolbenseitig ist auf dem Dämpfungsblech eine Gummi-, Kunststoff- oder Lackschicht angeordnet, die eine Dämpfungsschicht zwischen Kolben und dem Bremsbelag bildet. Ein direkter metallischer Kontakt zwischen dem Bremskolben und der Belagträgerplatte wird so verhindert und eine Entkoppelung der beim Bremsvorgang auftretenden Schwingungen erreicht.

Aus der Technik sind auch mehrschichtige Belagträgerplatten bekannt. Die DE 195 42 524 A1 offenbart einen entsprechenden Bremsbelag, wobei das Belagmaterial an mehreren der Schichten des Belagträgers befestigt ist.

Die EP 0 282 129 A1 beschreibt einen Bremsbelag mit einteiliger Trägerplatte, bei dem sich Abschnitte eines Dämpfungsblechs in Ausnehmungen der Trägerplatte erstrecken und ein Verrutschen des Dämpfungsblechs verhindern.

Aus der US 3 477 551 A ist ein Bremsbelag bekannt, bei dem sich Ausformungen der Trägerplatte in das Belagmaterial erstrecken.

Bei der Herstellung von Bremsbelägen ist es unerläßlich, daß der Reibbelag dauerhaft mit der Belagträgerplatte verbunden ist. Außerdem ist sicherzustellen, daß das Dämpfungsblech fest mit der Belagträgerplatte verbunden ist und die Bremskraft wie vorgesehen überträgt. Da die Klebstoffschicht zwischen Dämpfungsblech und Belagträgerplatte bei erhöhten Bremsentemperaturen eine verminderte Haftung gegenüber auftretenden Scherkräften vermittelt, sind bei dem bekannten Bremsbelag zusätzliche Mittel zur Sicherung des Dämpfungsbleches gegen seitliches Verrutschen vorgesehen. Zu diesem Zweck sind in der Belagträgerplatte Durchgangsöffnungen mit Senkbohrungen ausgebildet. In die Öffnungen eingesetzte Senkschrauben sichern das Dämpfungsblech gegen Scherkräfte und seitliches Verrutschen.

Aufgabe der Erfindung ist es, die Befestigung zwischen Dämpfungsblech und Reibbelag zu verbessern und zu vereinfachen.

Gelöst wird diese Aufgabe durch einen Bremsbelag mit den Merkmalen des Anspruchs 1.

Der erfindungsgemäße Bremsbelag zeichnet sich durch eine besonders einfache Ausbildung der Mittel zur Sicherung des Dämpfungsbleches gegen seitliches Verrutschen aus. Das wenigstens eine Verankerungselement, das an dem Dämpfungsblech angeformt ist, gewährleistet eine verdrehfeste Verbindung zwischen Dämpfungsblech und Reibbelag und nimmt im Betrieb auftretende Scherkräfte problemlos auf. Die einstückige Ausbildung von Dämpfungsblech und Verankerungselementen vereinfacht sowohl die Herstellung der Sicherungsmittel als auch die Montage und Befestigung des Dämpfungsblechs. Letzteres wird mit dem wenigstens einen, aus der Blechebene abgewinkelten Verankerungselement durch die zugehörige Ausnehmung in der Belagträgerplatte eingeführt und mit seinem freien Endabschnitt in den Reibbelag eingeführt.

Eine besonders feste Verbindung zwischen Reibbelag, Dämpfungsblech und zwischenliegender Belagträgerplatte ergibt sich in Weiterbildung der Erfindung dadurch, daß der in den Reibbelag eingreifende Abschnitt des Verankerungselements so ausgebildet ist, daß er im Reibbelag unter Formschluß verankert ist. Ein solcher Formschluß läßt sich beispielsweise dadurch realisieren, daß der in den Reibbelag eingreifende Abschnitt des Verankerungselements S-, schrauben- oder zickzackförmig ausgebildet ist.

Eine weitere Erhöhung des Zusammenhalts zwischen Dämpfungsblech, Belagträgerplatte und Reibbelag läßt sich in Weiterbildung der Erfindung dadurch erreichen, daß eine Mehrzahl von Verankerungselementen um einen Druckaufnahmebereich verteilt, an dem Dämpfungsblech angeordnet ist. Vorzugsweise ist dabei jedem einzelnen der Verankerungselemente eine eigene Ausnehmung in der Belagträgerplatte zugeordnet, so daß die Verteilungsmuster zwischen der Mehrzahl von Verankerungselementen und der entsprechenden Anzahl von Ausnehmungen in der Belagträgerplatte im Wesentlichen übereinstimmen. Die Zahl und Anordnung der Ausnehmungen in der Belagträgerplatte ist so zu wählen, daß die mechanische Stabilität des Bremsbelages nicht wesentlich geschwächt wird.

Das Dämpfungsblech ist vorzugsweise mit einer Belagträgerplatte durch eine Klebstoffschicht verbunden oder mit Hilfe anderer Befestigungsmittel befestigt. Es ist jedoch auch möglich, das Dämpfungsblech ausschließlich über die unter Formschluß in den Reibbelag eingreifenden Verankerungselemente mit dem Reibbelag zu verbinden. Über die in den Reibbelag eingreifenden Verankerungselemente ist eine dreidimensionale, standfeste Verbindung zwischen Reibbelag, Belagträgerplatte und Dämpfungsblech hergestellt.

Die Verankerungselemente können bereits vor dem Pressen und Härten des Reibbelagmaterials in das Reibbelagmaterial eingebettet und durch einen anschließenden Preß- und Härtevorgang verankert werden. Dabei wird das Dämpfungsblech mit einem Klebstoff auf die benachbarte Seite der Belagträgerplatte geklebt, wobei die Verankerungselemente die Ausnehmungen in der Belagträgerplatte durchgreifen. Eine Reibbelagform wird mit einer Schicht aus Reibmasse und einer Schicht aus Trägermasse verfüllt, und die Belagträgerplatte wird über eine aufgelegte Spiegelplatte mit dem ReibbelagMaterial verpreßt. Dabei bohren sich die Verankerungselemente in die Reibbelagmasse und werden bei zunehmender Kompression der Reibbelagmasse dicht umschlossen. Nachfolgend kann eine Elastomer-Schicht auf der Rückseite des Dämpfungsblechs angeordnet werden.

Vorzugsweise ist das Verankerungselement durch Stanzen und/oder Biegen aus dem Dämpfungsblech geformt. Die Herstellung des Dämpfungsblechs ist in diesem Fall besonders einfach und kann ggf. in einem Herstellungsschritt stattfinden. Es können zum Beispiel Zungen aus dem Dämpfungsblech gestanzt werden, die nach einer Seite aus der Ebene des Dämpfungsblechs abgekantet werden, so daß sie etwa senkrecht aus der Blechebene vorstehen. Es ist weiterhin möglich, Kerbungen und/oder Stanzschnitte in die Randbereiche des Dämpfungsblechs einzubringen, und die so gebildeten Zungen zu biegen und zu formen.

Vorzugsweise ist der auf der Belagträgerplatte angeordnete Reibbelag aus einer Schichtenfolge aus Trägermasse und Reibmasse gebildet. Die Verankerungselemente des Dämpfungsblechs durchgreifen die Trägermasse und greifen mit ihren freien Enden in die Reibmasse-Schicht ein.

Vorteilhafte Ausführungsformen der Erfindung sind in den Unteransprüchen gekennzeichnet.

Figur 1 zeigt schematisch ein Ausführungsbeispiel eines erfindungsgemäßen Bremsbelags in Draufsicht auf dessen Dämpfungsblechseite.

Figur 2 zeigt eine schematische Schnittansicht gemäß II-II der Figur 1.

Figur 3 zeigt eine vergrößerte Darstellung des Ausschnitts A der Figur 2.

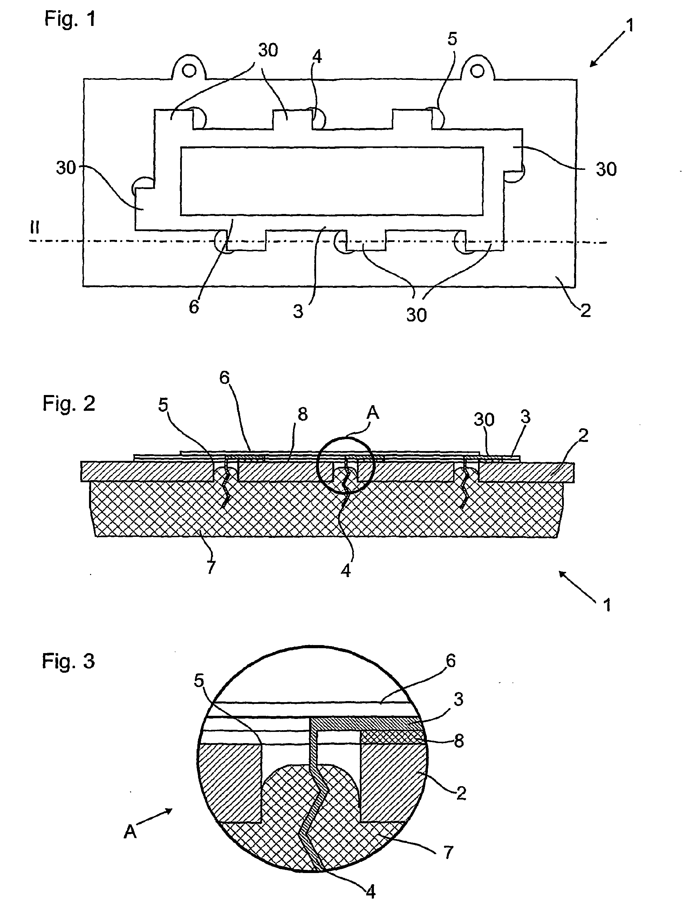

Der Bremsbelag 1 weist eine Belagträgerplatte 2 auf, an deren eine Seite ein Dämpfungsblech 3 großflächig angeordnet und mit der Belagträgerplatte 2 verbunden ist. Das Dämpfungsblech 3 hat seitlich angeformte Ansätze 30, von denen jeweils einseitig streifenförmige Verankerungselemente 4 abgewinkelt sind. Verlauf und Ausbildung der streifenförmigen Verankerungselemente nach dem beschriebenen Ausführungsbeispiel sind am besten in den Figuren 2 und 3 zu sehen. Die Verankerungselemente werden bei dem beschriebenen Ausführungsbeispiel in gleichmäßigen Abständen aus dem Kantenbereich eines ursprünglich rechteckigen Blechzuschnitts ausgestanzt, wobei eine im wesentlichen rechtwinkelige Verbindung an der Übergangsstelle zwischen Verankerungselement 4 und Ansatz 30 erhalten bleibt. Die ausgestanzten freien Enden der Verankerungselemente sind jeweils zickzackförmig verformt (Figuren 2 und 3). Anstelle der zickzackförmigen Gestaltung der freien Enden der Verankerungselemente 4 können auch andere Verankerungsformen vorgesehen sein, so beispielsweise wellenförmige oder schraubenförmige Ausbildungen des Verankerungselements oder eine gabelförmige Spreizung des freien Endes jedes Verankerungselements.

Die Verankerungselemente 4 können auch aus anderen Zuschnitten geformt werden; so können beispielsweise die Verankerungselemente strahlenförmig nach außen weisenden Ansätze durch Abwinkeln und Ausbilden eines Verankerungsabschnitts an den jeweils Enden geformt werden. Die Ansätze können auch durch Verdrehen in eine Schraubenform gebracht werden.

In der Belagträgerplatte 2 sind Durchgangsöffnungen 5 ausgebildet, die von den Verankerungselementen 4 durchgegriffen werden. Das Öffnungsraster ist daher mit dem Raster der Verankerungselemente 4 ausgerichtet, damit die abgewinkelten Verankerungselemente 4 beim Aufsetzen des Dämpfungsblechs 3 problemlos in die Durchgangsöffnungen 5 eingeführt werden können.

Auf der der Belagträgerplatte 2 abgewandten Seite des Dämpfungsblechs 3 ist eine Dämpfungsschicht 6 angeordnet. Die Dämpfungsschicht, die beispielsweise aus einem Elastomer bestehen kann, verhindert den unmittelbaren Metall-Metall-Kontakt zwischen Belagträgerplatte 2 und einem in der Zeichnung nicht dargestellten Bremskolben und entkoppelt damit den Bremsbelag 1 von den Bremskolben-Schwingungen.

Der Reibbelag 7 ist auf der dem Dämpfungsblech 6 abgewandten Seite der Belagträgerplatte 2 durch Verpressen aufgebracht. Dabei wird die Reibbelagmasse in die Öffnungen 5 der Belagträgerplatte 2 sehr weitgehend eingepreßt. Wie in Figur 2 zu sehen, tauchen die Verankerungselemente 4 nach Durchgreifen der ihnen zugeordneten Durchgangsöffnungen 5 in die Reibbelagmasse ein und sorgen für eine formschlüssige, praktisch nicht lösbare Verbindung zwischen dem Dämpfungsblech 3 und dem Reibbelag 7 unter Einschluß der dazwischenliegenden Belagträgerplatte. Der Formschluß wird durch den zickzackförmigen Verlauf der freien Enden der Verankerungselemente 4 erreicht. Andere Verformungen oder auch Aufspreizungen der einzelnen Verankerungselemente 4 erfüllen den gleichen Zweck.

Der ebene Hauptteil des Dämpfungsblechs 3 und die Belagträgerplatte 2 sind über eine Klebstoffschicht 8 miteinander verbunden; die Klebstoffschicht 8 besteht in dem beschriebenen Ausführungsbeispiel aus einem heißbindenden Klebstoff. Die Klebstoffverbindung 8 zwischen Dämpfungsblech 3 und Belagträgerplatte 2 füllt im Wesentlichen alle Zwischenräume zwischen den miteinander verbundenen Platten aus. Luftspalte zwischen Dämpfungsblech und Belagträgerplatte, die zu störenden Schwingungen führen können, sind dadurch weitestgehend vermieden.

Im Rahmen des Erfindungsgedankens sind zahlreiche Abwandlungen möglich. So können die Anzahl und Ausbildung der an das Dämpfungsblech angeformten Verankerungselemente je nach Einsatzfall und Größe der Belagträgerplatte variieren; die Verankerungselemente können auch separat gefertigt und in einem gemeinsamen Löt- oder Schweißschritt mit dem Dämpfungsblech verbunden werden. Das Reibbelagmaterial kann mehrschichtig sein und aus einer Underlayer- und Reibmassen-Schichtenfolge bestehen.

## Patentansprüche

1. Bremsbelag mit einer Belagträgerplatte (2), einem auf einer ersten Seite der Belagträgerplatte angeordneten Reibbelag (7), einem Dämpfungsblech (3), das an einer zweiten, dem Reibbelag abgewandten Seite der Belagträgerplatte angeordnet ist und Mitteln zur Sicherung des Dämpfungsbleches gegen seitliches Verrutschen, **dadurch gekennzeichnet, dass** aus dem Dämpfungsblech (3) eine Mehrzahl aus der Blechebene abgewinkelter Verankerungselemente (4) mit jeweils einem freien Ende geformt sind, die jeweils eine zugehörige Ausnehmung in der Belagträgerplatte (2) durchgreifen und mit ihrem freien Ende in den Reibbelag (7) eingreifen.

2. Bremsbelag nach Anspruch 1, **dadurch gekennzeichnet, dass** der in den Reibbelag (7) eingreifende Abschnitt jedes Verankerungselements (4) so ausgebildet ist, dass er im Reibbelag unter Formschluß verankert ist.

3. Bremsbelag nach Anspruch 1 oder 2, **dadurch gekennzeichnet, dass** die Verankerungselemente (4) durch Stanzen und/oder Biegen aus dem Dämpfungsblech (3) geformt sind.

4. Bremsbelag nach einem der Ansprüche 1 bis 3, **dadurch gekennzeichnet, dass** der in den Reibbelag (7) eingreifende Abschnitt jedes Verankerungselements (4) S-, schrauben- oder zickzackförmig ausgebildet ist.

5. Bremsbelag nach einem der Ansprüche 1 bis 4, **dadurch gekennzeichnet, dass** eine Mehrzahl der Verankerungselemente (4) um einen Druckaufnahmebereich verteilt an dem Dämpfungsblech (3) angeordnet ist.

6. Bremsbelag nach einem der Ansprüche 1 bis 5, **dadurch gekennzeichnet, dass** das Dämpfungsblech (3) mit der Belagträgerplatte (2) verklebt ist.

7. Bremsbelag nach einem der Ansprüche 1 bis 6, **dadurch gekennzeichnet, dass** der Reibbelag (7) mit Hilfe von Verbindungsmitteln an der Belagträgerplatte (2) befestigt ist.

8. Bremsbelag nach einem der Ansprüche 1 bis 7, **dadurch gekennzeichnet, dass** der Reibbelag (7) eine Schichtenfolge aus einer Trägermasse und einer Reibmasse aufweist und dass jedes Verankerungselement (4) zumindest in die Trägermasse eingreift.

9. Bremsbelag nach Anspruch 8, **dadurch gekennzeichnet, dass** wenigstens ein Verankerungselement (4) die Trägermasse durchgreift und in die Reibmasse eingreift.

10. Bremsbelag nach einem der Ansprüche 1 bis 9, **dadurch gekennzeichnet, dass** das Dämpfungsblech (3) eine Dicke von 0,5-3 mm aufweist.

## Claims

1. Brake lining with a lining carrier plate (2), a friction lining (7) arranged on a first side of the lining carrier plate, a damping plate (3), which is arranged at a second side of the lining carrier plate remote from the friction lining, and means for securing the damping plate against lateral slipping, **characterised in that** a plurality of anchoring elements (4) bent out of the plate plane are formed in each instance with a free end from the damping plate (3), which elements each engage through an associated recess in the lining carrier plate (2) and engage by the free end thereof in the friction lining (7).

2. Brake lining according to claim 1, **characterised in that** the section, which engages in the friction lining (7), of each anchoring element (4) is so constructed that it is anchored in the friction lining by mechanically positive coupling.

3. Brake lining according to claim 1 or 2, **characterised in that** the anchoring elements (4) are formed by punching and/or bending out of the damping plate (3).

4. Brake lining according to one of claims 1 to 3, **characterised in that** the section, which engages in the friction lining (7), of each anchoring element (4) is formed to be S-shaped, helical or zigzag-shaped.

5. Brake lining according to one of claims 1 to 4, **characterised in that** a plurality of the anchoring elements (4) is arranged at the damping plate (3) to be distributed around a pressure accepting region.

6. Brake lining according to one of claims 1 to 5, **characterised in that** the damping plate (3) is glued to the lining carrier plate (2).

7. Brake lining according to one of claims 1 to 6, **characterised in that** the friction lining (7) is fastened to the lining carrier plate (2) with the help of connecting means.

8. Brake lining according to one of claims 1 to 7, **characterised in that** the friction lining (7) has a layer sequence of a carrier mass and a friction mass and that each anchoring element (4) engages at least in the carrier mass.

9. Brake lining according to claim 8, **characterised in that** at least one anchoring element (4) passes through the carrier mass and engages in the friction mass.

10. Brake lining according to one of claims 1 to 9, **characterised in that** the damping plate (3) has a thickness of 0.5 to 3 millimetres.

## Revendications

1. Garniture de frein comportant une plaque support de garniture (2), une garniture de friction (7) disposée sur une première face de la plaque support de garniture, une tôle d'amortissement (3) qui est disposée sur une deuxième face, opposée à la garniture de friction de la plaque support de garniture, et des moyens permettant de protéger la tôle d'amortissement à l'égard d'un glissement latéral, **caractérisée en ce que**, à partir de la tôle d'amortissement (3), sont formés une pluralité d'éléments d'ancrage (4) coudés à partir du plan de tôle avec respectivement une extrémité libre, lesquels éléments d'ancrage passent respectivement au travers d'un évidement associé dans la plaque support de garniture (2) et s'engrènent avec leur extrémité libre dans la garniture de friction (7).

2. Garniture de frein selon la revendication 1, **caractérisée en ce que** la section s'engrenant dans la garniture de frein (7) de chaque élément d'ancrage (4) est configurée de telle sorte qu'elle est ancrée dans la garniture de friction par conjugaison de forme.

3. Garniture de frein selon la revendication 1 ou 2, **caractérisée en ce que** les éléments d'ancrage (4) sont formés par estampage et/ou cintrage à partir de la tôle d'amortissement (3).

4. Garniture de frein selon l'une quelconque des revendications 1 à 3, **caractérisée en ce que** la section s'engrenant dans la garniture de friction (7) de chaque élément d'ancrage (4) est en forme de S, de zigzag ou sous forme hélicoïdale.

5. Garniture de frein selon l'une quelconque des revendications 1 à 4, **caractérisée en ce qu'**une pluralité des éléments d'ancrage (4) est disposée sur la tôle d'amortissement (3) en étant répartie autour d'une zone d'absorption de pression.

6. Garniture de frein selon l'une quelconque des revendications 1 à 5, **caractérisée en ce que** la tôle d'amortissement (3) est collée avec la plaque support de garniture (2).

7. Garniture de frein selon l'une quelconque des revendications 1 à 6, **caractérisée en ce que** la garniture de friction (7) est fixée sur la plaque support de garniture (2) à l'aide de moyens de liaison.

8. Garniture de frein selon l'une quelconque des revendications 1 à 7, **caractérisée en ce que** la garniture de friction (7) présente une succession de couches composée d'une masse support et d'une masse de friction, et **en ce que** chaque élément d'ancrage (4) s'engrène au moins dans la masse support.

9. Garniture de frein selon la revendication 8, **caractérisée en ce qu'**au moins un élément d'ancrage (4) passe au travers de la masse support et s'engrène dans la masse de friction.

10. Garniture de frein selon l'une quelconque des revendications 1 à 9, **caractérisée en ce que** la tôle d'amortissement (3) a une épaisseur de 0,5 à 3 mm.
